(19) Europäisches Patentamt
European Patent Office
Office européen des brevets

(11) Publication number: **0 093 791**
**A1**

# (12) EUROPEAN PATENT APPLICATION

(21) Application number: **82104107.6**

(22) Date of filing: **12.05.82**

(51) Int. Cl.³: **C 08 G 63/62**, C 11 D 1/66

(43) Date of publication of application: **16.11.83**
**Bulletin 83/46**

(84) Designated Contracting States: **DE FR GB IT NL**

(71) Applicant: **THE DOW CHEMICAL COMPANY, Dow Center 2030 Abbott Road Post Office Box 1967, Midland Michigan 48640 (US)**

(72) Inventor: **Timberlake, John Foushee, 12724 E. Sheraton Avenue, Baton Rouge Louisiana 70815 (US)**
Inventor: **Baugh, Daniel Webster, Jr., 127 Lily, Lake Jackson Texas, 77566 (US)**
Inventor: **Burkes, Bobby, 41 Christy Lane, New Orleans Louisiana 70127 (US)**

(74) Representative: **Casalonga, Axel et al, BUREAU D.A. CASALONGA OFFICE JOSSE & PETIT Baaderstrasse 12-14, D-8000 München 5 (DE)**

## (54) Process for preparing polycarbonate-type surfactants from ethylene carbonate and a monohydroxy alcohol.

(57) A process for preparing polycarbonate type nonionic surfactant compositions comprising monohydroxy alcohols capped with polycarbonate groups. The surfactant compositions comprise aliphatic, nonaromatic cycloaliphatic or aromatic alcohols which have been capped with block polycarbonate groups formed by the reaction of the alcohols with ethylene carbonate in the presence of an alkali metal salt catalyst. The surfactant properties are varied by first reacting the alcohols with ethylene oxide to form a block polyether group cap on the alcohols before the reaction with ethylene carbonate or by further reacting the polycarbonate capped alcohols with ethylene oxide to form a terminal polyether block group. The surfactants are formed by reacting 2–20 moles ethylene carbonate and 3–50 moles ethylene oxide per mole of the alcohols.

EP 0 093 791 A1

0093791

# PROCESS FOR PREPARING POLYCARBONATE-TYPE SURFACTANTS FROM ETHYLENE CARBONATE AND A MONOHYDROXY ALCOHOL

This invention relates to methods for making nonionic surfactants, with particular reference to making nonionic surfactant compositions comprising monohydroxy alcohols capped with a polycarbonate.

In many industrial and household cleaning applications it is desirable or necessary to use a surfactant in the cleaning formulations to achieve satisfactory wetting and cleansing. Furthermore, in many of these industrial and household applications it is necessary to maintain a low level of foam during the cleaning operation. For example, surfactants that produce excessive foaming may be unsuitable in an industrial spray metal cleaning operation or for use as an active ingredient in detergents and rinse aids for household mechanical dishwashers.

One type of nonionic surfactant known in the art is the fatty acid ester of an alcohol ethoxylate, which ester is produced by condensing ethylene oxide with a detergent range alcohol, and then reacting such ethoxylated alcohol with fatty acids containing from 8

to 18 carbon atoms, or with the chlorides of such acids. Surfactants produced in this manner are described in U.S. Patent 1,970,578 which teaches such surfactants as having excellent wetting, foaming and cleansing properties. However, surfactants of this type would not be satisfactory for uses where the suppression of foam is important.

Another type of nonionic surfactant known in the art is described in Japanese Patent Publication 56-106,919 which teaches a nonionic surfactant composition prepared in a manner similar to the method of this application. However, the final products are inferior as foam suppressing agents.

The present invention is a process for the preparation of a polycarbonate type surfactant comprising reacting ethylene carbonate and a monohydroxy alcohol in the presence of an alkali metal salt catalyst at a temperature of 130°C to 210°C.

The present invention is also directed to a process wherein said surfactant is reacted with ethylene oxide in the amount of 3 to 50 moles of oxide per mole of surfactant.

More specifically, the surfactant compositions prepared by the process of the present invention comprise compounds represented by the following structural formulas:

$$R\text{-}O\text{-}[CH_2\text{-}CH_2\text{-}O\text{-}\overset{O}{\overset{\|}{C}}\text{-}O\text{-}CH_2\text{-}CH_2\text{-}O]_y\text{-}H$$

$$R-O-[CH_2-CH_2-O]_x-[CH_2-CH_2-O-\overset{O}{\overset{\|}{C}}-O-CH_2-CH_2-O]_y-H$$

$$R-O-[CH_2-CH_2-O-\overset{O}{\overset{\|}{C}}-O-CH_2-CH_2-O]_y-[CH_2-CH_2-O]_x-H$$

where R is an aliphatic, non-aromatic cycloaliphatic or aromatic group, y is a number from 1 to 10 and x is a number from 3 to 50. The monohydroxy alcohol may be capped with ethylene oxide before reacting it with ethylene carbonate or the reaction product of the ethylene carbonate/monohydroxy alcohol reaction may be further reacted with ethylene oxide to provide surfactants having different physical properties. The hydroxyethylation reaction of the alcohol or polycarbonate reaction product with ethylene oxide can be easily accomplished by using a basic catalyst, i.e., KOH, at a temperature of about 90°C to about 120°C.

The reaction of the monohydroxy alcohol or ethoxylated alcohol with ethylene carbonate is represented by the following equations.

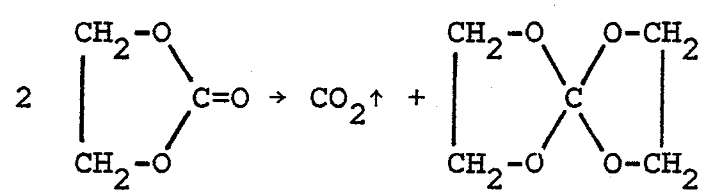

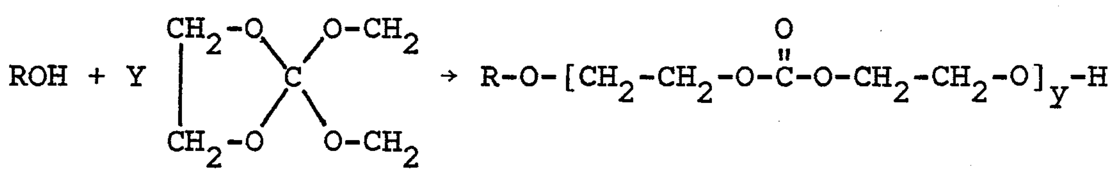

The above equations illustrate that 50 percent of the available $CO_2$ in the ethylene carbonate is lost as a

result of the formation of the carbonate intermediate illustrated by the first equation. Thus, the theoretical maximum yield of the polycarbonate block portion in the surfactant compositions is only 50 percent of the $CO_2$ available in the original ethylene carbonate reactant. Moreover, it is believed that the ethylene carbonate/-alcohol reaction is initiated by an ethoxy ether radical resulting from the decomposition of ethylene carbonate to ethylene oxide and $CO_2$. This ethoxy ether free radical initiation of the polycarbonate/alcohol reaction appears to be accurate since only about 38 percent to 43 percent of the $CO_2$ in the ethylene carbonate is normally retained as a carbonate radical in the final surfactant compositions.

Generally, about 2 to 20 moles, and more preferably about 3 to 10 moles, of ethylene carbonate per mole of monohydroxy alcohol or ethoxylated monohydroxy alcohol are reacted together to provide the hydrophobic properties in the final surfactant compositions. Also, about 3 to 50 moles, and preferably about 3 to 10 moles, of ethylene oxide per mole of monohydroxy alcohol- or polycarbonate-capped monohydroxy alcohol are reacted together to provide the hydrophilic properties in the final surfactant compositions.

The temperature of the ethylene carbonate/-alcohol reaction is maintained between about 130°C to about 210°C, and preferably between about 140°C and about 170°C. A reaction temperature below 130°C is not desirable since the formation of the polycarbonate block portion of the surfactant compositions is extremely slow at such low temperatures. Reaction

temperatures above about 210°C are also undesirable since ethylene carbonate will decompose into ethylene oxide and $CO_2$ at these elevated temperatures and the more reactive hydroxyethylation or polyether reactions will occur.

In order to form the polycarbonate block portion of the surfactant compositions, it is necessary that the ethylene carbonate/alcohol reaction be run in the presence of an alkali metal salt catalyst. Examples of useful alkali metal salt catalyst are sodium stannate, potassium stannate, sodium carbonate, potassium carbonate, sodium hydroxide, potassium hydroxide, the sodium alkoxide of the monohydroxy alcohol and the potassium alkoxide of the monohydroxy alcohol. Sodium stannate has been found to be a particularly effective catalyst since high yields and low reaction time were obtained when it was used.

In view of the preceding discussion, it will be appreciated that the polycarbonate type surfactant products produced by this invention have, in all probability, some random ether radicals disposed within the polycarbonate block portion of the products since the theoretical 50 percent $CO_2$ retention in the products is normally not achieved during the ethylene carbonate/alcohol reaction. Furthermore, it will be appreciated that the surfactant products are not a single compound in each instance, but are a mixture of compounds of different molecular weights characterized by an average molecular weight depending on the termination point of the ether and/or carbonate blocks in each molecule.

The following examples illustrate the preparation of the polycarbonate type surfactants in accordance with the present invention.

Example 1

A stirred reaction mixture of 2640 grams (30 moles) of ethylene carbonate, 558 grams (3 moles) of n-dodecanol and 12.0 grams 0.056 mole) of sodium stannate was heated to 170°C for 24 hours in a reaction vessel under a nitrogen atmosphere. The mixture was then cooled to 130°C and 30 grams of finely divided magnesium silicate and 60 grams of celite clay were added to purify the mixture. The mixture was continuously stirred at 130°C for an additional 21 hours. At this point, the reaction product mixture was permitted to cool and was then filtered to remove the magnesium silicate and celite clay. 2000 Grams of a pale yellow, transparent, viscous liquid reaction product was obtained which retained about 40 weight percent of the available $CO_2$ in the ethylene carbonate as a carbonate radical in the reaction product as determined by nuclear magnetic resonance spectral analysis.

Example 2

A stirred reaction mixture of 44 grams (0.5 mole) of ethylene carbonate, 18.4 grams (0.1 mole) of cyclododecanol and 0.2 gram (0.001 mole) of sodium stannate was heated to 170°C for 22 hours in a reaction vessel under a nitrogen atmosphere. The mixture was then cooled to 130°C and 0.5 gram of magnesium silicate and 1.0 gram of celite clay were added to purify the mixture. The mixture was continuously stirred at 130°C for an additional one hour. The reaction product mixture was permitted to cool and was then filtered to

remove the magnesium silicate and celite clay. 35.1 Grams of a pale yellow, transparent, viscous liquid reaction product was obtained which solidified on standing. About 40 weight percent of the available $CO_2$ in the ethylene carbonate was retained as a carbonate radical in the product.

Example 3

The reaction conditions of Examples 1 and 2 were duplicated except that a mixture of 44 grams (0.5 mole) of ethylene carbonate, 20 grams (0.091 mole) of 4-nonylphenol and 0.2 gram (0.001 mole) of sodium stannate was reacted at 170°C for 18 hours. The temperature of the mixture was reduced to 130°C, 1 gram of magnesium silicate and 1 gram of celite clay were added to the mixture and stirring was continued for one hour before cooling and filtering the reaction product. About 33 weight percent of the available $CO_2$ in the ethylene carbonate was retained as a carbonate radical in the reaction product.

Example 4

The reaction conditions of Examples 1 and 2 were again duplicated except that a mixture of 44 grams (0.5 mole) of ethylene carbonate, 4.7 grams (0.025 mole) of n-dodecanol and 0.5 gram (0.002 mole) of sodium stannate was reacted at 150°C for 40 hours. 30.3 Grams of a yellow, transparent, viscous liquid reaction product was obtained after purification and filtration as in Example 3. 41 Weight percent of the available $CO_2$ was retained as a carbonate radical in the reaction product.

Example 5

The reaction conditions of Examples 1 and 2 were again duplicated except that a mixture of 44 grams (0.5 mole) of ethylene carbonate, 5 grams (0.025 mole) of 2,4,6,8-tetramethyl-1-nonanol and 0.2 gram (0.001 mole) of sodium stannate was reacted at 150°C for 20 hours. 26.4 Grams of reaction product was obtained after purification and filtration as in Example 3. 40 Weight percent of the available $CO_2$ was retained as a carbonate radical in the reaction product.

Example 6

The reaction conditions of Examples 1 and 2 were again duplicated except that a mixture of 44 grams (0.5 mole) of ethylene carbonate, 6.3 grams (0.034 mole) of n-dodecanol and 0.01 gram (0.001 mole) of potassium carbonate was reacted at 135°C for 24 hours. The temperature of the mixture was then raised to 165°C and reacted for an additional 44 hours. 26.9 Grams of a dark brown, transparent, viscous liquid reaction product was obtained after purification and filtration as in Example 3. 19 Weight percent of the available $CO_2$ was retained as a carbonate radical in the reaction product.

Example 7

37.3 Grams (0.2 mole) of n-dodecanol and about 0.05 gram (0.002 mole) of sodium metal were mixed in a reaction vessel at 100°C until the sodium dissolved. 88.1 Grams (1.0 mole) of ethylene carbonate were added to the reaction vessel and the stirred mixture was heated to 200°C and maintained at that temperature for 2 hours. 83.2 Grams of a pale yellow, transparent, viscous liquid reaction product were

obtained after purification and filtration as in Example 3.

Example 8

A stirred reaction mixture of 22 grams (0.25 mole) of ethylene carbonate, 16.6 grams (0.05 mole) of a mixture of n-dodecyl and n-tetradecyl triethoxylates (approximately 50/50 mole percent mixture) and 0.2 gram (0.001 mole) of sodium stannate was heated to 150°C for 17 hours in a reaction vessel under a nitrogen atmosphere. 24.1 Grams of a pale yellow, transparent, viscous liquid reaction product were obtained after purification and filtration as in Example 3.

Example 9

A stirred reaction mixture of 44 grams (0.5 mole) of ethylene carbonate, 23.6 grams (0.05 mole) of a mixture of n-dodecyl and n-tetradecyl hexaethoxylates (approximately 50/50 mole percent) and 0.2 gram (0.001 mole) of sodium stannate was heated to 150°C for 24 hours. 48.1 Grams of a pale yellow, transparent, viscous liquid reaction product were obtained after purification and filtration as in Example 3.

Example 10

27 Grams (0.31 mole) of ethylene carbonate, 53.0 grams (0.10 mole) of 2,4,6,8-tetramethyl-1-nonyl octaethoxylate and 0.2 gram (0.001 mole) of sodium stannate were heated to 150°C for 20 hours in a stirred reaction vessel as in Example 8. 64.2 Grams of a pale yellow, transparent, viscous liquid reaction product were obtained after purification and filtration as in Example 3.

Example 11

440 Grams (5 moles) of ethylene carbonate, 530 grams (0.96 mole) of 2,4,6,8-tetramethyl-1-nonyl octaethoxylate and 2 grams (0.01 mole) of sodium stannate were heated to 160°C for 24 hours in a stirred reaction vessel under a nitrogen atmosphere. The mixture was then cooled to 110°C, 10 grams of magnesium silicate and 10 grams of celite clay were added and the mixture was stirred for one hour. After filtration, 703 grams of a pale yellow, transparent, viscous liquid reaction product were obtained.

Example 12

15.1 Grams (0.17 mole) of ethylene carbonate, 17.1 grams (0.0087 mole) of tertiary-octylphenol capped with 40 moles of ethylene oxide per mole of alcohol and 0.2 gram (0.001 mole) of sodium stannate were heated to 160°C for 12 hours in a stirred reaction vessel as in Example 8. 10.7 Grams of a tan solid reaction product were obtained after purification and filtration as in Example 3.

Example 13

The reaction conditions of Example 5 were duplicated except that a mixture of 44 grams (0.5 mole) of ethylene carbonate, 20 grams (0.1 mole) of 2,4,6,8-tetramethyl-1-nonanol and 0.2 gram (0.001 mole) of sodium stannate was reacted at 150°C for 20 hours. The reaction product was purified and filtered as in Example 3. 20 Grams (0.038 mole) of this reaction product and 0.1 gram (0.0018 mole) of potassium hydroxide were placed in a reaction vessel and heated to 110°C. 7.5 Grams (0.17 mole) of ethylene oxide were then added to the reaction vessel and the

0093791

mixture was continuously stirred for 16 hours. 23.5 Grams of a pale yellow, transparent, viscous liquid reaction product were obtained after purification and filtration as in Example 3.

Example 14

The reaction conditions of Example 5 were again duplicated except that a mixture of 44 grams (0.5 mole) of ethylene carbonate, 10 grams (0.05 mole) of 2,4,6,8-tetramethyl-1-nonanol and 0.2 gram (0.001 mole) of sodium stannate was reacted at 150°C for 20 hours. 20 Grams (0.023 mole) of this reaction product, 5 grams (0.114 mole) of ethylene oxide and 0.1 gram (0.0018 mole) of potassium hydroxide were continuously stirred at 110°C for 16 hours in a reaction vessel. 25.5 Grams of a pale yellow, transparent, viscous liquid reaction product were obtained after purification and filtration as in Example 3.

The following Table 1 illustrates the mole ratios of ethylene carbonate and ethylene oxide reacted with each mole of alcohol and the catalyst used for the above examples.

TABLE 1

| Example | ROH[1] | Catalyst | Moles EO[2] | Moles EC[3] | Moles EO |
|---|---|---|---|---|---|
| 1 | $C_{12}OH$ | $Na_2SnO_3$ | - | 10 | - |
| 2 | $Cyc \cdot C_{12}OH$ | $Na_2SnO_3$ | - | 5 | - |
| 3 | 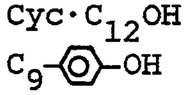 | $Na_2SnO_3$ | - | 5.5 | - |
| 4 | $C_{12}OH$ | $Na_2SnO_3$ | - | 20 | - |
| 5 | $C_{13}OH$ | $Na_2SnO_3$ | - | 20 | - |
| 6 | $C_{12}OH$ | $K_2CO_3$ | - | 14.7 | - |
| 7 | $C_{12}OH$ | Na | - | 5 | - |
| 8 | $C_{12}/C_{14}$-OH | $Na_2SnO_3$ | 3 | 5 | - |
| 9 | $C_{12}/C_{14}$-OH | $Na_2SnO_3$ | 6 | 10 | - |
| 10 | $C_{13}OH$ | $Na_2SnO_3$ | 8 | 3 | - |
| 11 | $C_{13}OH$ | $Na_2SnO_3$ | 8 | 5 | - |
| 12 | 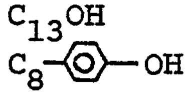 | $Na_2SnO_3$ | 40 | 2 | - |
| 13 | $C_{13}OH$ | KOH | - | 5 | 4.5 |
| 14 | $C_{13}OH$ | KOH | - | 10 | 4.9 |

[1] Monohydroxy alcohol

[2] Ethylene oxide

[3] Ethylene carbonate

The following Table 2 illustrates the surfactant properties for the reaction products of the above examples.

TABLE 2

| Example[1] | Surface Tension[2], dynes/cm | Interfacial Tension[3], dynes/cm | Foam Height, Cms[4] Initial | Foam Height, Cms[4] Final | Wetting Time[5] seconds | Cloud Point[6], °C |
|---|---|---|---|---|---|---|
| Control | | | | | >300 | |
| 1 | 28.2 | 1.3 | 1.5 | 0.5 | >300 | <25 |
| 2 | 37.4 | 1.0 | 0.5 | 0.2 | >300 | <25 |
| 3 | 31.3 | 9.4 | 0.8 | 0.7 | >300 | Insoluble |
| 4 | 31.8 | 1.3 | *5.5 | *3.0 | *120 | <25 |
| 5 | 32.7 | 1.6 | *4.6 | *0.8 | >300 | <25 |
| 6 | 33.3 | 5.8 | 19.6 | 8.9 | 75 | <25 |
| 7 | 28.8 | 1.0 | 5.6 | 1.8 | 85 | <25 |
| 8 | 31.7 | 2.2 | 23.0 | 6.6 | 45 | 35 |
| 9 | 29.8 | 1.8 | 6.1 | 2.3 | 61 | - |
| 10 | 27.5 | 1.1 | 8.6 | 3.8 | 36 | 18 |
| 11 | 26.8 | 1.7 | 6.0 | 1.6 | 40 | 24 |
| 12 | 34.3 | 8.9 | 26.9 | 12.2 | >300 | - |
| 13 | 26.8 | 2.4 | 7.6 | 3.3 | 81 | <5 |
| 14 | 29.6 | 1.2 | 8.4 | 3.8 | 66 | <5 |

[1] 0.1 weight percent concentration in deionized water. Numbers marked with * are 1.0 weight percent concentration in deionized water.

[2] ASTM D-1331 test procedure.

[3] ASTM D-1331 test procedure.

[4] Foam height was determined by whipping at low speed for one minute in a blender 250 ml of a 0.1 percent by weight surfactant/water solution. The solution and foam were poured into a standard 500 ml graduated cylinder having a 4.7 centimeter diameter. The foam height was measured immediately and after five minutes.

[5] In the wetting test, a nine-inch (22.8 cm) strip of unmercerized natural cotton cloth tape was attached to a one-gram hook, which in turn was attached to a forty-gram weight by thread to determine wetting time. The solution concentration was 0.1 percent by weight surfactant in deionized water. The arrangement was dropped into 500 ml of the surfactant solution in a graduated cylinder. When the tape was wetted, it dropped to the bottom of the cylinder, indicating the wetting time.

[6] ASTM D-2024 test procedure except 0.1 percent concentration used in place of 1.0 percent concentration.

1. A process for the preparation of a polycarbonate type surfactant comprising reacting ethylene carbonate and a monohydroxy alcohol in the presence of an alkali metal salt catalyst at a temperature of 130°C to 210°C.

2. The process of Claim 1 wherein 2 to 20 moles of ethylene carbonate per mole of said monohydroxy alcohol are reacted.

3. The process of Claim 1 wherein said monohydroxy alcohol has the formula:

$$R\text{-}O\text{-}[CH_2\text{-}CH_2\text{-}O]_x\text{-}H$$

wherein R is an aliphatic, non-aromatic cycloaliphatic or aromatic group and x is a number from 3 to 50.

4. The process of Claim 1 wherein said surfactant is reacted with ethylene oxide in the amount of 3 to 50 moles of oxide per mole of surfactant.

European Patent Office

# EUROPEAN SEARCH REPORT

0093791

Application number

EP 82 10 4107

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | Patent Abstracts of Japan, vol. 5, no. 184, 21 November 1981 & JP - A - 56 - 106919 | 1,2 | C 08 G 63/62<br>C 11 D 1/66 |
| Y | DE-A-2 536 121 (BASF WYANDOTTE CORP.)<br>* claims 1, 2; example 1 * | 1,2 | |
| A | * page 7, lines 1 to 23 * | 3,4 | |
| A | DE-B-1 167 024 (PITTSBURGH PLATE GLASS CO.)<br>* claim, column 3, lines 23 to 26 * | 1-3 | |
| A | US-A-3 689 462 (M.J. MAXIMOVICH)<br>* claims 1, 2, 5 to 8; column 2, lines 68 to 72 * | 1-3 | |

TECHNICAL FIELDS SEARCHED (Int. Cl. 3)

B 01 F 17/00
C 08 G 63/62
C 11 D 1/00

The present search report has been drawn up for all claims

| Place of search | Date of completion of the search | Examiner |
|---|---|---|
| BERLIN | 10-01-1983 | BERTRAM H E H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82